## Europäisches Patentamt

## European Patent Office

## Office européen des brevets

(11) Numéro de publication: **0 284 133 B1**

(12) **FASCICULE DE BREVET EUROPEEN**

(45) Date de publication de fascicule du brevet: **03.06.92**

(51) Int. Cl.⁵: **G07F 7/10, H04L 9/00**

(21) Numéro de dépôt: **88200436.9**

(22) Date de dépôt: **08.03.88**

(54) **Procédé pour simultanément lire à distance et certifier une information présente dans une mémoire d'un support électronique.**

(30) Priorité: **13.03.87 FR 8703467**

(43) Date de publication de la demande:
**28.09.88 Bulletin 88/39**

(45) Mention de la délivrance du brevet:
**03.06.92 Bulletin 92/23**

(84) Etats contractants désignés:
**DE FR GB SE**

(56) Documents cités:
**EP-A- 0 035 448**
**EP-A- 0 096 599**
**EP-A- 0 114 522**
**EP-A- 0 138 386**

(73) Titulaire: **TRT TELECOMMUNICATIONS RA-DIOELECTRIOUES ET TELEPHONIOUES**
**88 rue Brillat Savarin**
**F-75013 Paris(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB SE**

(72) Inventeur: **Isphording, Willem**
**SOCIETE CIVILE S.P.I.D. 209, rue de l'Université**
**F-75007 Paris(FR)**

(74) Mandataire: **Charpail, François et al**
**Société Civile S.P.I.D. 156, Boulevard Haussmann**
**F-75008 Paris(FR)**

Rank Xerox (UK) Business Services

## Description

La présente invention a pour objet un procédé pour simultanément lire et certifier, à partir d'un appareil de traitement, une information présente à une adresse dans une mémoire d'un support électronique notamment amovible et portatif tel qu'une carte à mémoire, aussi appelée carte à microprocesseur ou carte à puce.

L'invention se situe dans le domaine du contrôle de la véracité des informations enregistrées dans une telle mémoire dans le but d'empêcher un fraudeur d'intervenir trompeusement dans l'échange d'informations entre la dite carte à mémoire et un appareil de traitement permettant de traiter cette carte soit localement soit à distance.

On sait que pour chaque application envisagée, des échanges d'information s'effectuent entre la carte et l'appareil de traitement pour habiliter des personnes à effectuer des opérations protégées.

La plupart des applications ont besoin, à un moment quelconque, de lire et/ou d'écrire de l'information dans la mémoire de la carte, par exemple pour garder une trace de l'opération effectuée; il est dès lors primordial de pouvoir vérifier avec certitude l'existence de l'information présente dans la mémoire de la carte; pour faciliter ce contrôle, il est connu que l'appareil de traitement sache à quelle adresse, dans la mémoire de la carte, se situe la dite information.

Dans le brevet EP 0 096 599 il est nécessaire que l'appareil de traitement sache par avance le contenu de l'information à vérifier; ainsi l'objet du contrôle est de vérifier la conformité de l'information.

Cette connaissance préalable du contenu de l'information est un inconvénient lorsque l'appareil de traitement ne connaît pas l'information à lire, ce qui est notamment le cas lorsqu'il n'est pas celui qui a provoqué l'écriture de la dite information.

Il est de plus connu de lire à distance des informations contenues dans une mémoire d'une carte de crédit en les chiffrant avant transmission pour réduire les risques de fraude.

Pour ce faire, il est connu de la publication EP-A-0 138 386 de transmettre un nombre aléatoire à la carte, qui sert à générer, en combinaison avec une donnée propre à la carte, la clé qui sera utilisée pour le chiffrage des donnés à transmettre. L'algorithme de chiffrement proposé est le Data Encryption Standard ou DES.

La présente invention a pour but de supprimer l'inconvénient mentionné plus haut.

A cet effet un procédé pour, simultanément, lire et certifier l'information s'effectue par l'exécution successive des étapes suivantes :

1. Un générateur de nombre aléatoire prévu dans l'appareil de traitement délivre un nombre aléatoire X,

2. Un algorithme réversible E prévu dans l'appareil de traitement chiffre le nombre aléatoire X avec la clé secrète SK propre à la carte à traiter d'où la valeur $X_c$,

3. La valeur $X_c$ est transmise à la carte ainsi que l'adresse @ à partir de laquelle on veut lire,

4. Le même algorithme réversible E, prévu dans la carte, déchiffre, avec la même clé secrète SK, la valeur $X_c$, d'où la valeur X,

5. La carte utilise l'adresse @ pour lire l'information INF,

6. La carte chiffre au moyen de la clé X, l'adresse @ et l'information INF, d'où un résultat R,

7. Le résultat R est transmis à l'appareil de traitement,

8. L'appareil de traitement déchiffre le résultat R puis compare l'adresse ainsi déchiffrée avec la dite adresse @, de sorte que, en cas d'égalité des adresses, l'information INF reçue et déchiffrée par l'appareil de traitement est certifiée.

Dans le cadre de la présente invention, il est clair que l'appareil de traitement peut indifféremment être situé en local, par exemple un terminal point de vente un lecteur de carte..., ou bien être situé à distance, par exemple un ordinateur central relié au(x) lecteur(s) de carte par un réseau de communication.

La lecture d'information, objet de la présente invention, se situe, dans le temps, après une phase préalable de reconnaissance mutuelle entre la carte et l'appareil de traitement; cette phase préalable s'effectue généralement immédiatement après l'introduction physique de la carte dans le lecteur de carte, et elle a notamment pour but de transférer à l'appareil de traitement l'identification de la carte; c'est à partir de cet identificateur que l'appareil de traitement est capable de connaître, par exemple au moyen d'une table interne, la clé secrète SK propre à la carte.

La présente invention sera mieux comprise à l'aide d'un exemple, non limitatif, de réalisation décrite avec les dessins suivants :

La figure 1 représente succinctement un appareil de traitement connecté à une carte à mémoire.

La figure 2 retrace schématiquement les étapes du procédé objet de l'invention.

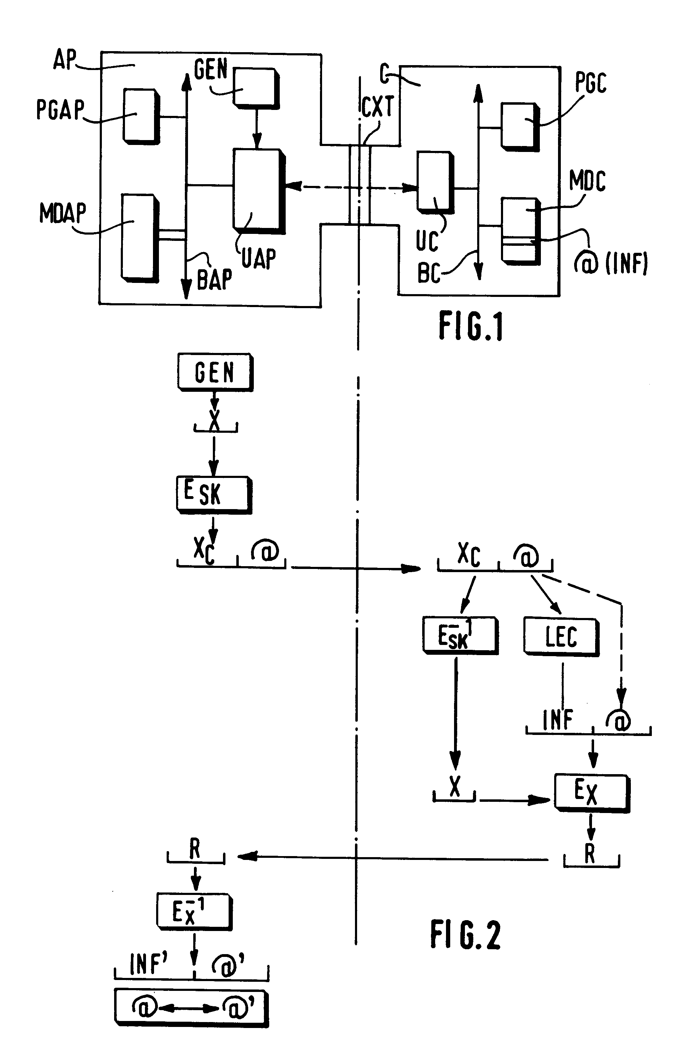

Sur la figure 1 sont représentés une carte C connectée à un appareil de traitement AP au moyen d'un dispositif de connexion temporaire CXT.

La connexion temporaire met en communication l'unité de traitement de l'appareil UAP et l'unité de traitement de la carte UC; d'une manière connue, le dispositif de connexion est conçu au moins pour transmettre une tension d'alimentation aux circuits électroniques de la carte et pour transmettre des informations entre les deux unités de traitement au moyen, par exemple, d'une ligne de communication série.

Dans la carte C un bus BC est représenté; il met en communication l'unité de traitement UC avec une mémoire de programme PGC, par exemple une ROM, et avec une mémoire de données MDC, par exemple une EPROM; la donnée INF à lire à l'adresse @ se trouve dans la mémoire de donnée MDC; cette architecture montre que la donnée INF n'est pas accessible directement par l'appareil de traitement AP :
ce dernier doit transmettre une demande de lecture à l'unité de traitement de la carte UC.

Dans l'appareil de traitement un bus BAP est représenté; il met en communication l'unité de traitement UAP avec une mémoire de programme PGAP, par exemple une ROM, et avec une mémoire de données MDAP, par exemple une EPROM.

Au moment de la connexion de la carte C avec l'appareil de traitement AP, une procédure de reconnaissance mutuelle est effectuée; c'est une procédure connue de laquelle il résulte que, au moins une clé secrète propre à chaque carte est maintenant aussi disponible dans l'appareil de traitement; par exemple, la clé secrète SK est alors mémorisée d'une part dans la mémoire de donnée de la carte MDC d'autre part dans la mémoire de donnée de l'appareil MDAP.

En cours de dialogue, il convient de se prémunir contre toute tentative de fraude laquelle consisterait, par exemple, à transmettre de fausses informations avec une ligne de dérivation connectée abusivement sur les moyens de connexions. Ainsi lors d'une demande de lecture d'une information INF formulée par l'appareil de traitement, une procédure de contrôle doit être prévue.

Selon la présente invention la lecture et la procédure de contrôle s'effectuent simultanément au sein d'un même procédé; ce procédé utilise un nombre aléatoire généré par un générateur GEN situé dans l'appareil de traitement AP; ce procédé utilise aussi un algorithme réversible E de chiffrement (déchiffrement) mémorisé d'une part dans la mémoire de programme PGAP de l'appareil de traitement, et d'autre part dans la mémoire du programme PGC de la carte.

Dans la suite du texte, la notation suivante est adoptée :

$$D_c = E_k(D) \text{ ou } D = E_k^{-1}(D_c)$$

sa signification est :

La donnée en clair D est chiffrée par l'algorithme E et la clé K pour fournir la donnée chiffrée $D_c$; inversement la donnée chiffrée $D_c$ est déchiffrée par l'algorithme $E^{-1}$ et la clé K pour fournir la donnée en clair D.

Les étapes successives du procédé sont représentées sur la figure 2 dans laquelle les étapes situées à gauche sont effectuées dans l'appareil de traitement, les étapes situées à droite sont effectuées dans la carte; chaque flèche horizontale représente une transmission entre l'appareil de traitement et la carte.

La première étape consiste à mettre en oeuvre le générateur de nombre aléatoire GEN lequel fournit un nombre X lequel est chiffré avec la clé secrète propre à la carte d'où

$$X_c = E_{SK}(X)$$

La donnée $X_c$ est transmise avec l'adresse de lecture @ à la carte.

Dans la carte la donnée $X_c$ est déchiffrée ($E_{SK}^{-1}$) pour fournir X, et l'adresse @ est utilisée pour lire l'information cherchée INF.

Maintenant l'ensemble constitué par l'information INF et l'adresse @ est chiffré avec le même algorithme E mais, cette fois-ci, avec la clé X d'où le résultat R

$$R = E_X (INF, @)$$

Le résultat R est transmis à l'appareil de traitement dans lequel R est déchiffré ce qui fournit INF′ et @′ :

$$INF', @' = E_x^{-1}(R)$$

Si tout c'est déroulé normalement, il est clair que @ doit être égal à @′, et, dans ce cas, il est certain que INF′ = INF c'est à dire que l'information lue est certifiée comme étant bien celle qui figure dans la carte à l'adresse @.

Le procédé présente l'avantage qu'il n'y a pratiquement aucune chance pour que le contenu des messages transmis soit deux fois le même; ceci complique la tâche d'un fraudeur qui observe les signaux au niveau des moyens de connexion (CXT).

Dans une forme préférentielle de réalisation, l'algorithme de chiffrement (déchiffrement) est l'algorithme connu sous le nom de Data Encryption Standard ou DES.

## Revendications

1. Procédé pour, simultanément, lire et certifier, à partir d'un appareil de traitement, une information présente à une adresse dans une mémoire d'un support électronique notamment amovible et portatif tel qu'une carte, comportant l'exécution successive des étapes suivantes :

1. Un générateur de nombre aléatoire prévu dans l'appareil de traitement délivre un nombre aléatoire X,

2. Un algorithme réversible E prévu dans l'appareil de traitement chiffre le nombre aléatoire X avec la clé secrète SK propre à la carte à traiter d'où la valeur $X_c$,

3. La valeur $X_c$ est transmise à la carte ainsi que l'adresse @ à partir de laquelle on veut lire,

4. Le même algorithme réversible E, prévu dans la carte, déchiffre, avec la même clé secrète SK, la valeur $X_c$, d'où la valeur X,

5. La carte utilise l'adresse @ pour lire l'information INF,

6. La carte chiffre au moyen de la clé X, l'adresse @ et l'information INF, d'où un résultat R,

7. Le résultat R est transmis à l'appareil de traitement,

8. L'appareil de traitement déchiffre le résultat R puis compare l'adresse ainsi déchiffrée avec la dite adresse @, de sorte que, en cas d'égalité des adresses, l'information INF reçue et déchiffrée par l'appareil de traitement est certifiée.

2. Procédé selon la revendication 1, caractérisé en ce que l'algorithme E de chiffrement déchiffrement est le DES, Data Encryption Standard.

## Claims

1. A method for simultaneously reading and verifying, using a processing device, information present at an address in a memory of an electronic carrier, in particular a removable and portable carrier such as a card, comprising the successive execution of the following steps:

1. a random number generator provided in the processing device delivers a random number X,

2. a reversible algorithm E provided in the processing device encodes the random number X with the secret key SK belonging to the card to be processed, giving the value $X_c$,

3. the value $X_c$ is transmitted to the card as well as the address @ at which it is required to read,

4. The same reversible algorithm E, provided in the card, decodes the value $X_c$, using the same secret key SK, giving the value X,

5. the card uses the address @ to read the information INF,

6. the card encodes, using the key X, the address @ and the information INF, giving a result R,

7. the result R is transmitted to the processing device,

8. the processing device decodes the result R and then compares the address thus decoded with said address @ in such a way that, when the addresses are equal, the information INF received and decoded by the processing device is verified.

2. A method as claimed in Claim 1, characterized in that the encoding-decoding algorithm E is the Data Encryption Standard or DES.

## Patentansprüche

1. Verfahren zum gleichzeitigen Lesen und Beglaubigen einer Information an einer Adresse in einem Speicher eines elektronischen, insbesondere mitnehmbaren und tragbaren Trägers, wie z.B. einer Karte, mit Hilfe eines Prozessors, wobei sich dieses Verfahren auf die aufeinanderfolgende Durchführung nachstehender Schritte bezieht:

1. Ein im Prozessor angebrachter Zufallszahlgenerator liefert eine Zufallszahl X,

2. Ein umkehrbarer Algorithmus E im Prozessor codiert die Zufallszahl X mit dem der Karte eigenen geheimen Schlüssel SK in den Wert $X_c$,

3. Der Wert $X_c$ wird zusammen mit der Adresse @, von der an zu lesen ist, aufdie Karte übertragen.

4. Derselbe umkehrbare Algorithmus E in der Karte decodiert mit demselben geheimen Schlüssel SK den Wert $X_c$ in den Wert X,

5. Die Karte braucht die Adresse @ zum Lesen der Information INF,

6. Die Karte codiert mit Hilfe des Schlüssels X die Adresse @ und die Ïnformation INF in ein Ergebnis R,

7. Das Ergebnis R wird aufden Prozessor übertragen,

8. Der Prozessor decodiert das Ergebnis R, vergleicht die so decodierte Adresse mit der Adresse @ derart, daß bei Gleichheit der Adressen die empfangene und vom Prozessor decodierte Information INF beglaubigt wird.

2. Verfahren nach Anspruch 1, dadurch gekennzeichnet, daß der Codierungs/Decodierungs-Algorithmus E die DES ist (DES = Data Encryption Standard).

**FIG.1**

**FIG.2**